Europäisches Patentamt

(19) European Patent Office

Office européen des brevets

(11) Publication number: **0 136 821**
A2

(12) # EUROPEAN PATENT APPLICATION

(21) Application number: **84305961.9**

(22) Date of filing: **31.08.84**

(51) Int. Cl.⁴: **B 29 C 65/08**
**B 31 B 17/64**

(30) Priority: **06.09.83 GB 8323889**
**16.07.84 GB 8418078**

(43) Date of publication of application:
**10.04.85 Bulletin 85/15**

(84) Designated Contracting States:
**BE CH DE FR IT LI LU NL**

(71) Applicant: **Amalgamated Mining & Trading Limited**
**Northway Lane**
**Tewkesbury Gloucestershire, GL20 8JG(GB)**

(72) Inventor: **Caudle, Graham**
**25 Arundel Road**
**Tewkesbury Gloucestershire(GB)**

(72) Inventor: **Teijsen, Cornelius Ludovicus**
**Koppelstraat 7**
**4645 RD Putte (NB)(NL)**

(74) Representative: **Lainé, Simon James et al,**
**Wynne-Jones, Lainé & James 22, Rodney Road**
**Cheltenham Gloucestershire. GL50 1JJ(GB)**

(54) A method and apparatus for forming containers.

(57) This invention relates to a method and to apparatus for applying a closure to a container. The apparatus, which is generally indicated at 10, comprises a table 11 having a sleeve receiving position 12, a closure locating position 13 and a welding station 14. A closure 17 is introduced into a drum sleeve 16 to sit on the bottom bead 17 at the locating position 13. It is then passed to the welding station 14 by a transport mechanism 18. Here a pressure head is introduced into the sleeve to apply pressure through the closure onto the bead causing it to be flattened. The flattened bead is then welded to the closure by a sonic horn 32.

FIG.1.

EP 0 136 821 A2

## A method and Apparatus for Forming Containers

This invention relates to a method and to apparatus for applying a closure to a container.

Many different methods of forming containers from plastics material have been proposed, but one common way is to form a sleeve and to insert a base at one end. In many cases a cardboard base has been provided, but for a wide range of products, particularly ones which require an airtight container, such a base is not necessarily satisfactory. Accordingly it has been proposed that a plastics base should be welded into the sleeve, but there are many problems involved, particularly if the containers are to be produced at a commercial rate. To date all of the methods proposed have required extremely complex apparatus and a large number of manufacturing steps.

It is an object of the invention to provide a method and apparatus for applying a closure to a container which reduce or simplify the manufacturing steps and increased production rates.

According to the present invention there is provided a method of applying a closure to a container formed as a sleeve having a bead at one end to provide a reduced diameter seat wherein the closure is placed on the seat, the bead is flattened and the closure is welded to the flattened bead.

In a preferred embodiment the bead of the container will be annular and continuous, but it will be understood that in the context of the specification the term bead covers any formation in the sleeve which provides a reduced diameter seat and which can be flattened for welding.

Preferably the bead is flattened by the application of pressure applied through the closure and the flattening of the bead and welding takes place simultaneously. Conveniently the closure and the bead are welded by sonic welding.

From another aspect the invention consists in apparatus for applying a closure to a container formed as a sleeve having a bead at one end to provide a reduced diameter seat, comprising locating means for positioning the closure on the seat, means for flattening the bead and welding means for welding the closure to the flattened bead.

In a preferred embodiment the welding means includes a sonic horn on which the sleeve can sit and the pressure means are insertable through the other end of the sleeve and act on the bead through the closure. Thus the pressure means can be provided with support means for mounting it such that its inclination can be changed from the first position in which it is introduced into the sleeve and the second position in which the pressure is applied. The pressure means may have a head profiled to co-operate with the closure.

The apparatus may further comprise retaining means for holding the sleeve in position during the flattening and/or welding of the sleeve and the retaining means may be introduced into the sleeve after the introduction of the pressure means.

The positioning means for locating the closure on the seat may comprise means for moving the closure through the other end of the sleeve down onto the seat and in a preferred embodiment it is constituted by an elongate member movably generally axially through the sleeve and carrying a suction device for releasably gripping the closure.

The apparatus may further include a transport mechanism for moving the sleeve into a first position to receive the closure and a second position in which it can be welded.

In a preferred embodiment the transport mechanism rotates the sleeve through the angle (for example through approximately 90°) to place the sleeve in the first position and slides the sleeve into the second position.

The transport mechanism may have a body for receiving the sleeve with its axis extending horizontally and may further include a pivotable slidable carriage for mounting    the body on the apparatus.

The invention also consists in a transport mechanism or a closure positioning means as defined above, but independent of the other features of the apparatus.

The invention may be performed in various ways and a specific embodiment will now be described, by way of example, with reference to the accompanying drawings, in which:-

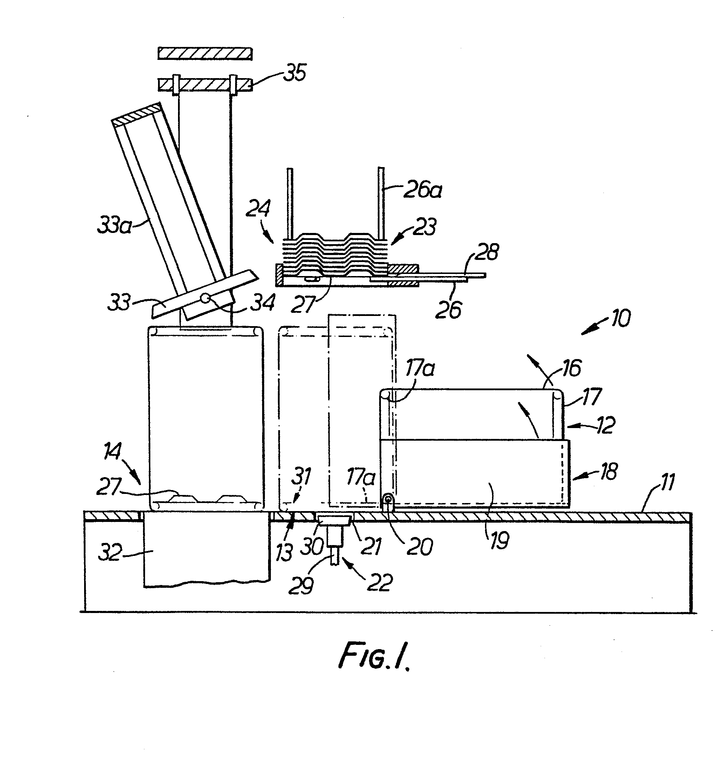

Figure 1 is a diagrammatic side view of an apparatus for applying a closure to a container;

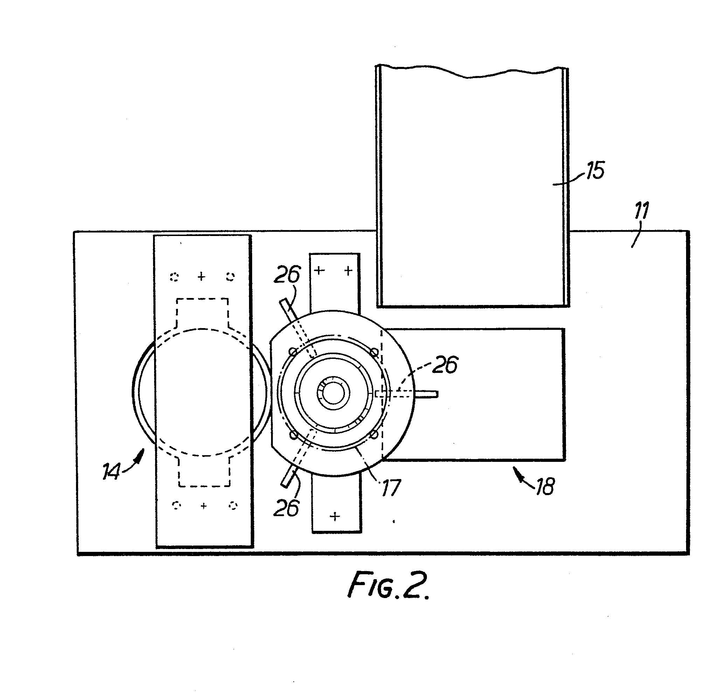

Figure 2 is a view of the apparatus of Figure 1 from above;

Figure 3 is a schematic side view of an alternative embodiment;

Figure 4 is a scrap side view of the lower end of a closure applying station;

Figure 5 is a schemetic view of a welding station during the insertion of the pressure head;

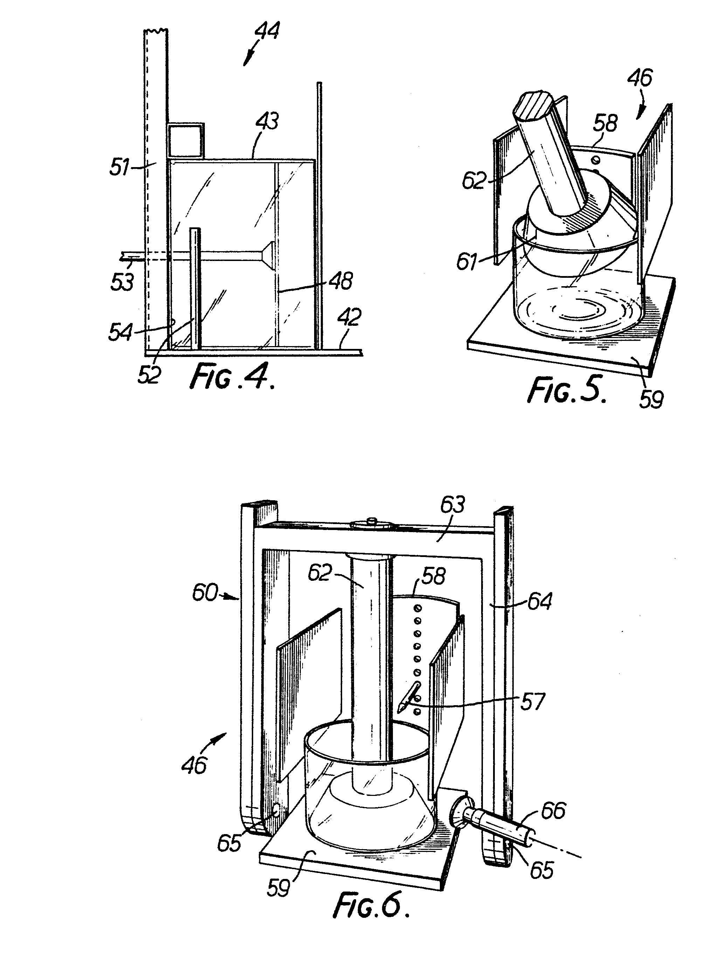

Figure 6 is a similar view to Figure 5 showing the welding position; and

Figure 7 is a plan view illustrating the drive for the transport mechanism of the apparatus.

An apparatus for applying a closure to a container generally indicated at 10, comprises a table 11 having a sleeve receiving position 12, a closure locating position 13 and a welding station 14. A chute 15 delivers plastics sleeves 16 having annular rolled beads 17, 17a at each end, to a transport mechanism 18.

The transport mechanism 18 comprises a V-shaped body 19, which catches the sleeve 16 and a carriage (not shown). The body 19 is pivotally mounted on the carriage at 20 so that the body can be lifted (by means not shown) up through 90° to deliver the sleeve 16 into the chain line position at the closure locating position 13. The carriage straddles that position so that it can be moved laterally, by means of hydraulic cylinders (not shown) to deliver the sleeve 16 into the welding station 14.

An aperture 21 is provided in the table 11 at the closure locating position 13 to allow a suction device 22 to pass axially upwardly through the sleeve 16 to a closure delivery mechanism 23.

The delivery mechanism 23 has three pins 26, spaced by 120°, which support a stack 24 of closures 25 which are retained by rods 26a. The pins 26 can be withdrawn axially to allow for the release of the bottommost closure 27 in the stack 24 whilst a laterally movable blade (or blades) 28 are simultaneously moved inwardly to support the rest of the stack.

The suction device 22 comprises an elongate member 29 having a rubber suction cup 30 at its uppermost end. The elongate member 29 can be moved (by means not shown) upwardly through the sleeve to engage the bottommost closure 27 by means of the cup 30 and then downwardly to draw the closure 27 into the sleeve 16 until it sits on the seat 31 provided by the bottommost bead 17a. The cup then releases the closure and is withdrawn beneath the level of the surface of table 11.

Once this step has been completed the transport mechanism 18 delivers the assembled sleeve 16 and closure 27 into the welding station 14 so that it sits centrally on a sonic welding horn 32, having pushed the preceding sleeve off the horn.

Once a sleeve is positioned in the welding station 14 a pressure head 33 is introduced into the sleeve. As will be seen below the pressure head must apply pressure to that part of the closure which rests on the bead 17a and hence its diameter is too great to pass the upper bead 17 except in a tilted position in which local flexing of the wall can take place. Accordingly the pressure head is mounted on a carriage (not shown) which allows pivotal movement about 34 and sliding movement into the sleeve. As the head 33 approaches the closure 27 it is swung into a horizontal position so that it engages the closure 27 crosses its whole surface. For simplicity the engaging surface of the pressure head is shown as being flat, but in practice it will be castellated or otherwise profiled to co-operate with the surface of the closure 27. Once the pressure head 33 is in position then its actuating mechanism 33a extends vertically axially up the sleeve leaving an annular gap which is filled by an annular collar, or collars, 35 which is lowered into the sleeve to restrain it against horizontal movement during welding. Once the pressure head 33 and collar 35 are in position the actuating mechanism 34a causes the pressure head to press down the closure 27 and hence flatten out the bead 17a until it forms a flat annular flange projecting inwardly around the bottom of the sleeve. Simultaneously or very shortly afterwards the sonic horn 31 is activated and the closure 27 is welded to the flattened beads 17a.

Once the weld is complete the collar 35 is removed as is the pressure head 33. The welded container is then pushed out of the welding station 14 by the next sleeve to arrive.

It will be appreciated that the process of forming a bead is extremely simple, in machine terms, and is well understood and hence the concept of flattening the bead during welding provides a very quick and simple way of providing the annular flange on which the closure can be welded. However, any simply formed formation, which can be flattened into a flange, would be suitable and it is not essential that the bead or like formation is continuous.

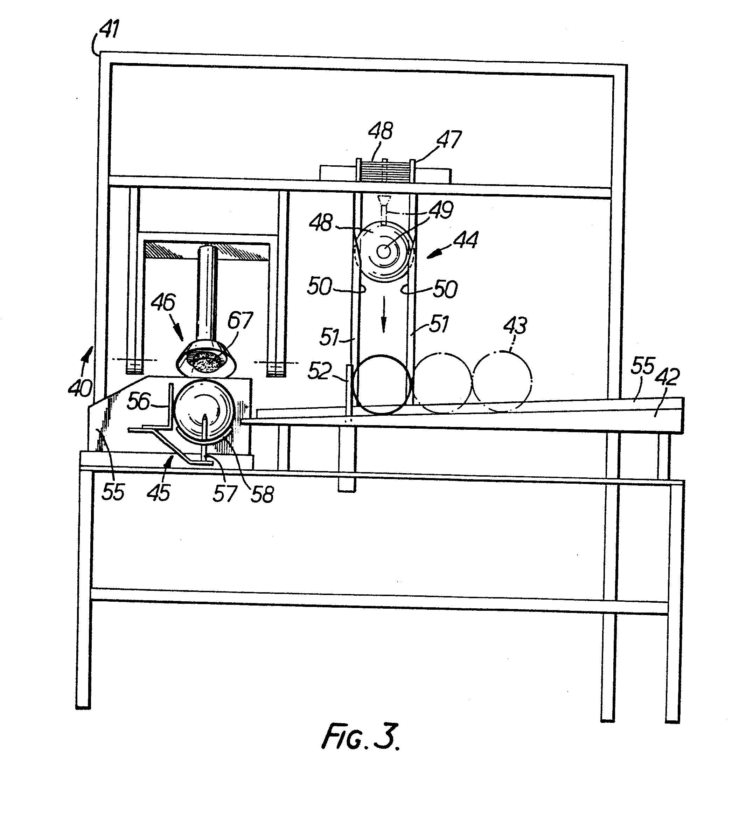

Figure 3 is a schematic side view of an alternative machine incorporating many of the features of the apparatus described above. It is particularly suitable where high operation speeds are required. The machine 40 has a frame 41 on which is mounted an inclined table 42 for receiving open ended drums or sleeves 43. The table extends past a base applying station 44 and, as will be described later, delivers the drums 43 to a transport mechanism 45. In turn the transport mechanism 45 passes the drums 43 to a welding station 46.

The base applying station includes a stacking device 47 which is arranged to deliver, one at a time, bases or closures 48 to a pivoted sucker 49. Once a base 48 is engaged on the sucker 49, the latter pivots through 90° to deliver the base into opposed aligned grooves 50 of parallel U-shape members 51, the base 48 then slides down the grooves under the force of gravity, until it is aligned with the solid line drum 43, which is held opposite the base applying station 44 by a retractable stop 52.

As can best be seen in Figure 4, a further sucker member 53 is positioned behind the U-shape members 51 for movement along the axis of the solid line drum 43. Once a base 48 reaches the bottom of grooves 50, the sucker member 53 is moved forward to engage and grip the base 48 and then push it through the open end of the drum 43. This can only be achieved by flexing the base 48 and it is therefore necessary for the sucker member 53 and base 48 to travel into the drum 43 a sufficient distance to allow the base 48 to flex back into its normal state. Once this has occurred the sucker member 53 is withdrawn and releases the base 48 as it engages bead 54 at the base of the drum 43.

On the completion of this operation stop 52 is retracted momentarily to allow the drum 43 to roll down the table 42 into the transport mechanism

45. It will be noted that the table 42 has an upstanding wall 55 for retaining the drums 43. The location of this wall is adjustable so that drums of different lengths can be processed by the machine.

The transport mechanism 45 includes a wall 56 which is pivotal between the position shown in Figure 3 and a horizontal position adjacent the welding station 46. The wall 55 carries a stop 56 and a locating needle 57 which passes through a cradle 58.

The cradle 58 is perforated along its length so that the position of the needle 57 can be adjusted in accordance with the length of the drums 43 being processed. The cradle 58 is mounted for relative movement with respect to the wall 55, when the latter is in its horizontal position, but pivots with the wall between the positions because of its engagement with the needle 57.

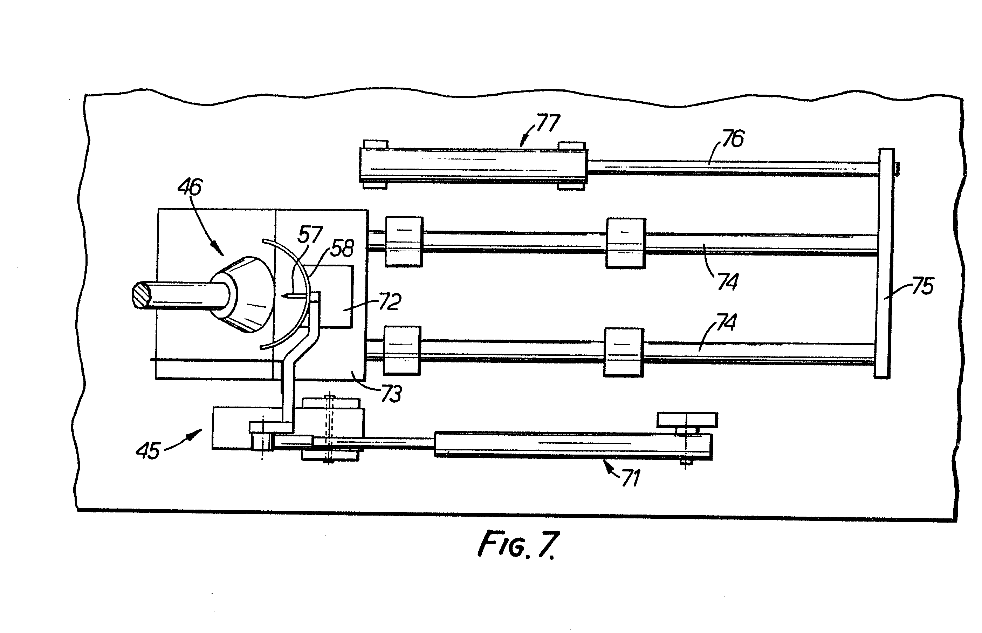

When a drum is received on the cradle 58 the transport mechanism 45 is pivoted into the horizontal position of the wall 55 so that the drum sits on that wall adjacent the welding station 46. The cradle 58 is then engaged by a movable support, which will be described in more detail in connection with Figure 7, which pushes the cradle and hence the drum towards the welding station until the position indicated in Figure 5 is reached. As will be seen in that figure the drum 43 then sits on a sonic welding horn 59 of the welding station 46.

A pressure applying device, generally indicated at 60, is pivotally mounted above the sonic welding horn 49 and comprises a frusto-conical pressure head 61 which is mounted at one end of a ram 62. Both the ram and head 62,61 are supported on the cross-member 63 of a U-shaped frame 64 which is pivoted about axis 65.

When the drum is received on the sonic horn 59, the pressure applying device is in its inclined position, as shown in Figures 3 and 5. The pressure head 61 is then moved downwardly into the drum in this inclination so that it can flex the walls of the drum 43 along a single diameter enabling it to pass through the reduced diameter end of the drum 43. Once this manoeuvre has been achieved the U-shaped frame 64 is rotated so that the ram 62 extends vertically and hence the pressure head 62 presses the base 48 onto the bead 54, flattening the latter as described in the previous embodiment. The weld is then completed and the pressure head 61 is withdrawn by reversing the insertion procedure. To assist in the freeing of the head from the drum a sucker device 66 can engage the wall of the drum 43 during the withdrawal movement.

As can be seen in Figure 3 the head 61 is generally hollow, but has a foam rubber insert 67 so that the head can handle bases with different profiles.

Turning to Figure 7 it will be seen that the transport mechanism 45 can be pivoted, about an axis 70, into its vertical position by means of a ram 71. In this position a plate 72, which is welded to the undersurface of the cradle 58, engages a moveable support 73. The block 73 is guided for movement on the frame 41 by guide rods 74, which are interconnected at the ends by a plate 75. The rods 76 of a further ram 77 is connected to the plate 75 such that contraction of the ram 77 moves the support 73, and hence the cradle 58 towards the welding station 46, whilst extension of the ram 77 withdrawns the cradle 58, to its original upright position. The ram 71 is then contracted, repivoting the transport mechanism 45 into its Figure 3 position ready for the next drum.

BKCD/JL

We Claim:

1. A method of applying a closure to a container formed as a sleeve having a bead at one end to provide a reduced diameter seat wherein the closure is placed on the seat, the bead is flattened and the closure is welded to the flattened bead.

2. A method as claimed in claim 1 wherein the bead is flattened by the application of pressure preferably applied through the closure.

3. A method as claimed in claim 1 wherein the bead is flattened and welded simultaneously.

4. A method as claimed in any of claims 1 to 3 wherein the closure and bead are welded by sonic welding.

5. Apparatus for applying a closure to a container formed as a sleeve having a bead at one end to provide a reduced diameter seat, comprising locating means for positioning the closure on the seat, means for flattening the bead and welding means for welding the closure to the flattened bead.

6. Apparatuas as claimed in claim 5, wherein the welding means includes a sonic horn on which the sleeve can sit.

7. Apparatus as claimed in claim 6, wherein the pressure means are insertable through the other end of the sleeve and act on the bead through the closure.

8. Apparatus as claimed in claim 7 further comprising support means for mounting the pressure means such that its inclination can be changed from the first position in which it is introduced into the sleeve to the second position in which the pressure is applied.

9. Apparatus as claimed in claim 7, wherein the pressure means has a head profiled, or formed with a flexible portion, to co-operate with the closure.

10. Apparatus as claimed in any one of the preceding claims wherein the positioning means comprises means for moving the closure through an end of the sleeve and then on to the seat.

11. Apparatus as claimed in claim 10, wherein the closure moving means includes an elongate member movably generally axially through the sleeve.

12. Apparatus as claimed in claim 11, wherein the member carries a suction device for releasably gripping the closure.

13. Apparatus as claimed in any one of claims 5 to 12, further comprising a transport mechanism for moving the sleeve into a first position to receive a closure and a second position in which it can be welded.

14. Apparatus as claimed in claim 13, wherein the transport mechanism rotates the sleeve through an angle to place the sleeve in the first position.

15. Apparatus as claimed in any one of claims 13 to 15, wherein the transport mechanism slides the sleeve into the second position.

16. A container having a closure applied by the method of claim 1 and/or the apparatus of claim 7.

FIG.1.

FIG.2.

0136821

FIG. 3.

FIG.4.

FIG.5.

FIG.6.

FIG. 7.

0136821